# EUROPÄISCHE PATENTSCHRIFT

(11) **EP 0 396 531 B1**
(45) Veröffentlichungstag und Bekanntmachung des Hinweises auf die Patenterteilung: **23.06.1993**
(21) Anmeldenummer: 90890134.1
(22) Anmeldetag: 02.05.1990
(51) Int. Cl.: F16D 35/00

(54) **Flüssigkeitsreibungskupplung**
Fluid friction clutch
Embrayage à frottement visqueux

(30) Priorität: 02.05.1989 AT 1035/89
(43) Veröffentlichungstag der Anmeldung: 07.11.1990
(73) Patentinhaber: STEYR-DAIMLER-PUCH AKTIENGESELLSCHAFT, 1010 Wien (AT)
(72) Erfinder: Peier, Othmar, Dipl.-Ing., A-8225 Pöllau (AT)

(56) Entgegenhaltungen:
- EP-A- 0 005 927
- EP-A- 0 332 608
- AT-B- 384 086
- DE-B- 1 185 426
- DE-C- 629 716
- GB-A- 1 051 678

## Beschreibung

Die Erfindung bezieht sich auf eine Flüssigkeitsreibungskupplung, die aus einem viskose Flüssigkeit enthaltenden Gehäuse, einer in dieses einragenden Welle, wechselweise mit der Welle und dem Gehäuse drehfest verbundenen, zwischeneinander greifenden Innen- und Außenlamellen und aus zwischen den Innen- oder Außenlamellen eingesetzten ringförmigen Spreizfedern besteht, wobei ein im Gehäuse abgedichtet axial verschiebbarer, von außen betätigbarer, auf die Lamellen zur Veränderung des Lamellenabstandes wirkender koaxialer Ringkolben vorgesehen ist.

Eine solche Flüssigkeitsreibungskupplung ist bereits bekannt (AT-B-384.086), wobei die Veränderung der Spaltbreite zwischen den Innen- und Außenlamellen dazu dient, den Schlupf bzw. die Drehzahl des getriebenen Kupplungsteils zu regeln, da die Mitnahme bzw. das übertragbare Drehmoment etwa umgekehrt proportional der Spaltbreite ist. Es hat sich aber gezeigt, daß die Regelbarkeit tatsächlich verhältnismäßig gering ist, zumal nicht darauf geachtet wurde, den vorhandenen Freiraum innerhalb des Gehäuses auf ein Mindestmaß herabzusetzen. Im übrigen befindet sich auch bei weitem Lamellenabstand noch immer Flüssigkeit in den Spalten zwischen den Lamellen, so daß dementsprechend auch noch eine Drehmomentübertragung stattfindet. Aus diesem Grund ist es beim Einbau einer solchen Kupplung in ein Kraftfahrzeug mit zwei Triebachsen häufig notwendig, eine zusätzliche Trennmöglichkeit im Antriebsstrang zwischen den Achsen vorzusehen, um beim Bremsen ein günstigeres Fahrverhalten zu erzielen.

Demnach liegt der Erfindung die Aufgabe zugrunde, die eingangs geschilderte Flüssigkeitsreibungskupplung so zu verbessern, daß mit ganz einfachen Mitteln der Regelbereich beträchtlich erweitert und sogar ein Betrieb ohne jede Flüssigkeitsreibung bzw. Drehmomentübertragung ermöglicht wird.

Die Erfindung löst die gestellte Aufgabe dadurch, daß die Menge der im Gehäuse enthaltenen viskosen Flüssigkeit in der Kolbenstellung für den weitesten Lamellenabstand dem Volumen der außerhalb des Umfanges der Innenlamellen liegenden Freiräume im Gehäuse entspricht.

Die Erfindung geht von der Erkenntnis aus, daß die viskose Flüssigkeit bei Drehung der Flüssigkeitsreibungskupplung zufolge der auf die Flüssigkeit wirkenden Fliehkraft unter Entmischung von Flüssigkeit und Luft einen Flüssigkeitsring am äußeren Innenumfang des Gehäuses bildet. Hat nun das Volumen der außerhalb des Umfanges der Innenlamellen liegenden Freiräume im Gehäuse die angegebene Größe, so ist verläßlich dafür gesorgt, daß in der den weitesten Lamellenabstand bestimmenden Kolbenstellung keine Flüssigkeit mehr zwischen den Innenlamellen vorhanden ist, so daß auch keine Drehmomentübertragung stattfinden kann. Selbstverständlich ist es für die einwandfreie Funktion dann erforderlich, daß bei einer Einwärtsbewegung des Kolbens zur Verringerung der Spaltbreite die Flüssigkeit keine andere Möglichkeit besitzt, als in die Spalten zwischen den Innen- und Außenlamellen auszuweichen, so daß die Drehmomentübertragung zunimmt, was sich je nach Abmessungen bis zu einer gegenseitigen Sperre der beiden Kupplungshälften steigern läßt. Um Ausweichräume für die Flüssigkeit beim Einwärtsschieben des Ringkolbens zu vermeiden, weist dieser lamellenseitig eine durchlaufende achsnormale Planfläche auf.

Der für Kraftfahrzeuge geforderte rasche Abbau des übertragbaren Drehmomentes zur Gewährleistung einer guten Bremsstabilität durch Entkoppelung der beiden Triebachsen ist bei einer raschen Rückstell-, d. h. Auswärtsbewegung des Kolbens durch verschiedene Tatsachen gewährleistet. So ergibt sich durch die Luftfreiheit des Flüssigkeitsringes bei der Rückstellbewegung des Kolbens mit maximaler Geschwindigkeit eine gewisse Saugwirkung, was ein teilweises Heraussaugen der Flüssigkeit aus den Spalten zwischen den Lamellen zur Folge hat. Gleichzeitig drückt die hoch komprimierte Luft im Inneren der Flüssigkeitsreibungskupplung die Flüssigkeit aus den Spalten heraus und bildet einen Luftposter zwischen den Innen- und Außenlamellen. Selbstverständlich stellt die auf die Flüssigkeit wirkende Fliehkraft eine zusätzlich radial nach außen gerichtete Kraft dar, die ein vollständiges Entweichen der Flüssigkeit aus den Spalten sicherstellt. Die sich weitenden Spalten erleichtern dabei das Auswärtsfließen der in den Spalten befindlichen Flüssigkeit, und außerdem wird durch die Spaltweitenzunahme der mittlere lokale Füllgrad, also der Quotient aus dem Flüssigkeitsvolumen, das sich im Überdeckungsbereich der Innen- und Außenlamelle eines einzelnen Spaltes befindet, und dem Gesamtvolumen überproportional gesenkt. Auf die Beachtung besonderer Viskositätswerte der Flüssigkeit kann verzichtet werden.

In der Zeichnung ist der Erfindungsgegenstand in einem Ausführungsbeispiel vereinfacht dargestellt, und zwar zeigen
- Fig. 1: eine Flüssigkeitsreibungskupplung in der Stellung, in der keine Drehmomentübertragung stattfindet, im Axialschnitt und
- Fig. 2: einen Teil der Kupplung bei minimaler Spaltbreite zwischen den Innen- und Außenlamellen.

Die Flüssigkeitsreibungskupplung besteht aus einem Gehäuse 1, das über eine Keilwellenverzahnung 2 mit einer nicht dargestellten Welle drehfest verbindbar ist, und aus einer in das Gehäuse 1 einragenden Hohlwelle 3, die ebenfalls eine Keilwellenverzahnung 4 für den Anschluß der zu kuppelnden Welle aufweist. Das Gehäuse 1 enthält viskose Flüssigkeit, wobei wechselweise mit der Hohlwelle 3 und dem Gehäuse 1 drehfest verbundene, zwischeneinander greifende Innenlamellen 5 und Außenlamellen 6 vorgesehen sind, die durch Tellerfedern 7 auseinandergespreizt werden. Ein lamellenseitig völlig plan ausgebildeter Ringkolben 8 kann mittels eines Stellringes 9 von außen verschoben werden, um den Lamellenabstand zu verändern.

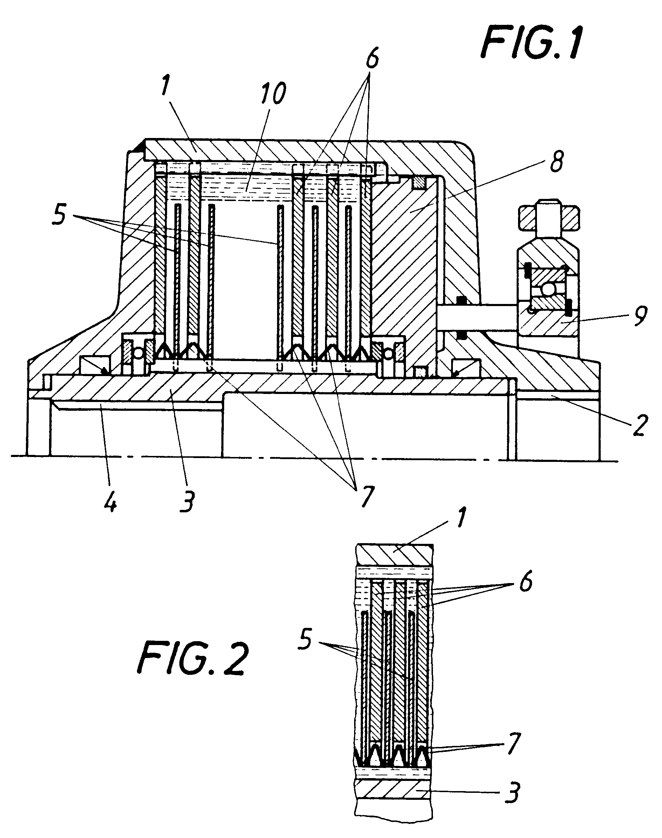

Durch die Drehung der Kupplung bildet die in ihr enthaltene viskose Flüssigkeit unter Einfluß der Fliehkraft einen Flüssigkeitsring 10, wobei die Flüssigkeitsmenge in der in Fig. 1 dargestellten Kolbenstellung für den weitesten Lamellenabstand dem Volumen der außerhalb des Umfanges der Innenlamellen 5 liegenden Freiräume im Gehäuse 1 entspricht. Die Tellerfedern 7 gewährleisten stets gleiche Spaltweiten innerhalb des gesamten Lamellenpaketes bei beliebiger Stellung des Ringkolbens 8.

Beim Einwärtsbewegen des Ringkolbens 8 bis zu der in Fig. 2 dargestellten Stellung mit minimaler Spaltweite, wobei diese Stellung durch einen Anschlag oder durch die Block bildung der Federn 7 bestimmt ist, wird die viskose Flüssigkeit aus dem Flüssigkeitsring 10 in die verbleibenden Spalten zwischen den Innen- und Außenlamellen 5, 6 gepreßt.

## Patentansprüche

1. Flüssigkeitsreibungskupplung, die aus einem viskose Flüssigkeit enthaltenden Gehäuse (1), einer in dieses einragenden Welle, wechselweise mit der Welle und dem Gehäuse (1) drehfest verbundenen, zwischeneinander greifenden Innen- und Außenlamellen (5,6) und aus zwischen den Innen- oder Außenlamellen (5,6) eingesetzten ringförmigen Spreizfedern (7) besteht, wobei ein im Gehäuse abgedichtet axial verschiebbarer, von außen betätigbarer, auf die Lamellen (5,6) zur Veränderung des Lamellenabstandes wirkender koaxialer Ringkolben (8) vorgesehen ist, dadurch gekennzeichnet, daß die Menge der im Gehäuse (1) enthaltenen viskosen Flüssigkeit in der Kolbenstellung für den weitesten Lamellenabstand dem Volumen der außerhalb des Umfanges der Innenlamellen (5) liegenden Freiräume im Gehäuse (1) entspricht.

## Claims

1. Fluid friction coupling, comprising a housing (1) containing the viscous fluid, a shaft extending into the housing, interengaging inner and outer disks (5,6) alternatingly coupled to the housing (1) and to the shaft, and annular expansion springs (7) fitted between the inner or the outer disks, a coaxial annular piston (8) actuated from outside and sealed and axially shiftable within the housing being provided, which is operatively connected to the disks (5,6) in order to vary the distance between the disks, **caracterized** in that the quantity of viscous liquid contained in the housing (1) corresponds to the volume of the free space in the housing (1) outside the circumference of the inner disks (5) when the annular piston is in the position for maximum distance between the disks.

## Revendications

1. Visco-coupleur se composant d'un carter rempli d'un fluide visqueux, d'un arbre pénétrant dans celui-ci, de disques intérieurs et extérieurs calés en rotation en alternance avec l'arbre et le carter et s'engageant mutuellement les uns dans les autres, ainsi que de ressorts d'écartement annulaires placés entre les disques intérieurs ou les disques extérieurs, un piston annulaire qui peut coulisser axialement de manière étanche dans le carter et qui peut être actionné de l'extérieur étant prévu pour agir sur les disques aux fins de varier la distance entre les disques, **caractérisé en ce** que la quantité de liquide contenu dans le carter correspond au volume des éspaces libres dans le carter en déhors de la circonférence des disques intérieurs, quand le piston se trouve dans sa position pour la distance maximale entre les disques.
